(19) Europäisches Patentamt
European Patent Office
Office européen des brevets

(11) **EP 2 246 201 B1**

(12) **EUROPEAN PATENT SPECIFICATION**

(45) Date of publication and mention
of the grant of the patent:
**29.08.2012 Bulletin 2012/35**

(51) Int Cl.:
***B60C 9/00*** *(2006.01)*   ***B60C 9/20*** *(2006.01)*
***B60C 9/22*** *(2006.01)*

(21) Application number: **09702093.7**

(22) Date of filing: **19.01.2009**

(86) International application number:
**PCT/JP2009/050700**

(87) International publication number:
**WO 2009/091066 (23.07.2009 Gazette 2009/30)**

(54) **PNEUMATIC RADIAL TIRE**

RADIALLUFTREIFEN

PNEU À CARCASSE RADIALE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **18.01.2008  JP 2008009680
18.01.2008  JP 2008009681**

(43) Date of publication of application:
**03.11.2010  Bulletin 2010/44**

(73) Proprietor: **Bridgestone Corporation
Tokyo 104-8340 (JP)**

(72) Inventor: **ZUIGYO, Yugo,
c/o BRIDGESTONE CORPORATION
Kodaira-shi
Tokyo 187-0031 (JP)**

(74) Representative: **Oxley, Robin John George
Marks & Clerk LLP
90 Long Acre
London
WC2E 9RA (GB)**

(56) References cited:
**WO-A1-2006/077978    JP-A- 2001 334 811
JP-A- 2004 218 189    JP-A- 2006 264 667
JP-A- 2008 290 516**

**Description**

TECHNICAL FIELD

The present invention relates to a pneumatic radial tire (hereinafter also simply referred to as "tire"), in particular, a pneumatic radial tire in which reinforcing cords used in the belt reinforcing layer are improved.

BACKGROUND ART

In general, in a pneumatic radial tire for high-speed driving, a belt reinforcing layer covering at least both edge portions of a belt layer is arranged on the outside of the belt layer in the radial direction of the tire. This belt reinforcing layer exerts an effect of enhancing the high-speed durability of the tire by suppressing, by a hoop effect, rising of the both edge portions of the belt layer caused by the centrifugal force during high-speed rotation of the tire.

Conventionally, as the cords constituting this belt reinforcing layer, organic fiber cords having a double-twist structure have been mainly used, which organic fiber cords were produced by twisting a plurality of first-twisted bundles of wires of organic fiber (the so called strands) together by second twist. Further, in order to reduce the production costs and the weights of tires, usage of cords having a single-twist structure comprising only a single strand has also been proposed (e.g., Patent Documents 1 and 2).

Patent Document 1: Japanese Examined Patent Application Publication No. 59-1601
Patent Document 2: Japanese Unexamined Patent Application Publication No. 2002-154304

DISCLOSURE OF THE INVENTION

PROBLEMS TO BE SOLVED BY THE INVENTION

Conventionally, as materials of the cords in the above-described belt reinforcing layer, organic fibers having low elastic moduli such as nylons have been mainly used. However, with such organic fiber cords having low elastic moduli, there have been cases where sufficient high-speed durability could not be obtained in tires in recent years having increased flatness and sizes, which has been problematic.

Further, on the other hand, it has been proposed that the high-speed durability of tires having increased flatness and sizes can be enhanced by using, as a belt reinforcing layer cord, the so called hybrid cord which was produced by twisting a first-twisted bundle of para-aramid fibers having a high elastic modulus with a first-twisted bundle of nylon fibers together. However, with such a hybrid cord, on production of the tire, it is difficult to assure a sufficient gap between the belt reinforcing layer cords and the belt layer cords arranged in the inside thereof in the radial direction of the tire. Therefore, in order to assure sufficient high-speed durability, a process of, for example, insertion of a rubber strip between the belt layer and the belt reinforcing layer has been necessary, which has led to increase in the production cost and increase in the weight of the tire, which has been problematic. Further, for pneumatic radial tires, it is important to.have low rolling resistance which contributes to low fuel consumption.

Thus, the present invention aims to solve the above problems and provide a pneumatic radial tire which can realize excellent high-speed durability and low rolling resistance, without causing other problems such as increase in the production cost and increase in the weight of the tire.

MEANS FOR SOLVING THE PROBLEMS

The present inventor intensively studied to discover that the above problems can be solved by using, as the cords for the belt reinforcing layer, single-twist cords comprising a combination of different types of fibers, thereby completing the present invention.

That is, the pneumatic radial tire of the present invention is a pneumatic radial tire comprising:

a bead core provided in each of a left-and-right pair of bead portions;
a carcass ply extending from a crown portion to both bead portions via both side wall portions and anchored to the bead cores, the carcass ply comprising a radial cord layer;
a belt arranged in the outside of the crown portion of the carcass ply in the radial direction;
a belt reinforcing layer arranged in the outside of the belt almost in the equatorial direction of the tire; and
a tread arranged in the outside of the belt reinforcing layer,

wherein fiber cords forming the belt reinforcing layer are single-twist cords comprising a combination of different types of fibers.

In the present invention, the different types of fibers are preferably a high-rigidity fiber having an original yarn elastic modulus of not less than 200 cN/dtex and a low-rigidity fiber having an original yarn elastic modulus of not more than 100 cN/dtex. Further, the different types of fibers are preferably a heat-shrinkable fiber having a heat shrinkage rate of not less than 0.5% after being heated at 160°C for 30 minutes and a heat non-shrinkable fiber having a heat shrinkage rate of not more than 0.2% after being heated at 160°C for 30 minutes. Further, the breaking elongation of the fiber cords forming the belt reinforcing layer is preferably not less than 3%; the content of the high-rigidity fiber having an original yarn elastic modulus of not less than 200 cN/dtex in the fiber cords forming the belt reinforcing layer is preferably not less than 25%; the content of the heat-shrinkable fiber having a heat shrinkage rate of not less than 0.5% after being heated at 160°C for 30 minutes in the fiber cords forming the belt reinforcing layer is preferably not less than 30%; and the fiber cords forming the belt reinforcing layer preferably have a total fineness of not less than 800 dtex and not more than 8500 dtex. Here, the term "heat shrinkage rate after being heated at 160°C for 30 minutes" means a value obtained by dry heat treatment of cords, which have been preliminarily similarly subjected to the dipping process, in an oven at 160°C for 30 minutes, followed by measurement of the cord lengths before and after the heat treatment under a load of 50 g and calculation according to the following equation. In the following equation, Lb represents the cord length before the heat treatment, and La represents the cord length after the heat treatment.

$$\text{Heat shrinkage rate after being heated (\%)} = \{(L_b - L_a)/L_b\} \times 100$$

EFFECT OF THE INVENTION

In the present invention, by using, as the fiber cords forming the belt reinforcing layer, single-twist cords comprising a combination of different types of fibers, the gap between the belt reinforcing layer cords and the belt layer cords can be assured without using a rubber strip or the like, and thereby a pneumatic radial tire can be realized which shows excellent high-speed durability and low rolling resistance, without causing other problems such as increase in the production cost and increase in the weight of the tire. That is, since, with a conventional hybrid cord, properties of one of the fibers are likely to appear and it is impossible to freely control the elastic modulus of the cord, the S-S curve and/or the heat shrinkage stress of the cord, only few advantages can be obtained by using different types of fibers. On the other hand, by using single twist cords as in the present invention, each different type of the cords exerts its properties to enable free control of the heat shrinkage stress.

BRIEF DESCRIPTION OF THE DRAWINGS

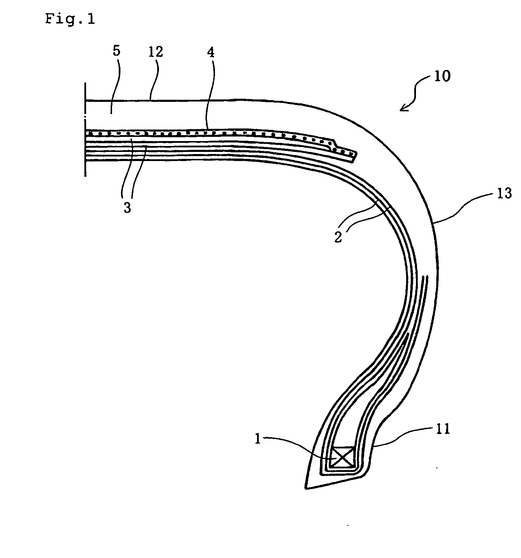

Fig. 1 is a cross-sectional view in the transverse direction showing the pneumatic radial tire of an embodiment of the present invention.

DESCRIPTION OF SYMBOLS

    1. Bead core
    2. Carcass
    3. Belt
    4. Belt reinforcing layer
    5. Tread
    11. Bead portion
    12. Crown portion
    13. Side wall portion

BEST MODE FOR CARRYING OUT THE INVENTION

The preferred embodiments of the present invention will be described in detail referring to the drawing.
Fig. 1 shows a half sectional view of a pneumatic radial tire as one example of the present invention. As shown in the figure, the pneumatic radial tire 10 of the present invention has:

a bead core 1 provided in each of a left-and-right pair of bead portions 11;

a carcass ply 2 extending from a crown portion 12 to both bead portions 11 via both side wall portions 13 and anchored to the bead cores 1, the carcass ply 2 comprising a radial cord layer;

a belt 3 arranged in the outside of the crown portion in the radial direction;

a belt reinforcing layer 4 arranged in the outside thereof almost in the equatorial direction of the tire; and a tread 5 arranged in the outside thereof.

In the present invention, the belt reinforcing layer 4 is formed with single-twist cords comprising a combination of different types of fibers. Examples of the combination of different types of fibers include combinations of fibers having different original yarn elastic moduli and fibers having different heat shrinkage rates.

In cases where the combination of different types of fibers is a combination of fibers having different original yarn elastic moduli, the single-twist cords preferably comprise a combination of a high-rigidity fiber having an original yarn elastic modulus of not less than 200 cN/dtex and a low-rigidity fiber having an original yarn elastic modulus of not more than 100 cN/dtex. Here, the tensile elastic modulus of the original yarn of each fiber can be measured according to JIS L-1013, and the initial modulus calculated based on the load at an elongation of 0.1% and the load at an elongation of 0.2% is adopted.

The high-rigidity fiber used in the belt reinforcing layer 4 has an original yarn elastic modulus of not less than 200 cN/dtex, preferably 300 to 500 cN/dtex. In cases where the original yarn elastic modulus of the high-rigidity fiber is less than 200 cN/dtex, a large amount of fiber is necessary to obtain desired tire durability, and as a result, the weight and the cost increase. Particular examples of such a high-rigidity fiber which can be used include para-aramid fibers, polyketone fibers and wet-gel-spun polyvinyl alcohol (PVA) fibers.

In the present invention, the content of the high-rigidity fiber in the fiber cords forming the belt reinforcing layer 4 is preferably not less than 25%, more preferably 30 to 75%. In cases where the content of the high-rigidity fiber is less than 25%, a large amount of fiber is necessary to obtain desired tire durability, and as a result, the weight and the cost increase. On the other hand, in cases where the content of the high-rigidity fiber is too large, control of the elastic modulus is difficult, which is not preferred.

In cases where the combination of different types of fibers is a combination of fibers having different heat shrinkage rates, the single-twist cords preferably comprise a combination of a heat-shrinkable fiber and a heat non-shrinkable fiber. The ratio between these heat-shrinkable fiber and heat non-shrinkable fiber in the single-twist cords is preferably determined such that the content of the heat-shrinkable fiber is not less than 30%. In cases where the content of the heat-shrinkable fiber is less than 30%, a large amount of fiber is necessary to obtain a desired tire effect, and as a result, the weight and the cost increase.

The heat-shrinkable fiber used in the belt reinforcing layer 4 preferably has a heat shrinkage rate of not less than 0.5%, for example, 2 to 4% after being heated at 160°C for 30 minutes. In cases where the heat shrinkage rate of the heat-shrinkable fiber is less than 0.5%, it is difficult to give a sufficient heat shrinkability to the entire cord, so that the production of the tire is difficult. Particular examples of such a heat-shrinkable fiber which can be used include polyethylene terephthalate (PET) fibers and polyketone fibers.

The heat non-shrinkable fiber used in the belt reinforcing layer 4 preferably has a heat shrinkage rate of not more than 0.2%, for example, 0 to 0.1% after being heated at 160°C for 30 minutes. In cases where the heat shrinkage rate of the heat non-shrinkable fiber is higher than 0.2%, the heat shrinkability of the entire cord is too high, so that it is difficult to control the strength and elongation properties of the cord. Particular examples of such a heat non-shrinkable fiber which can be used include para-aramid fibers.

In the present invention, the total fineness of the fiber cords forming the belt reinforcing layer 4 is preferably not less than 800 dtex and not more than 8500 dtex. In cases where the total fineness of the fiber cords is less than 800 dtex or higher than 8500 dtex, their production is difficult, which is not preferred. In the later-mentioned Examples, cords in which 2 or 3 fibers of different types are twisted together are used, but the present invention is not restricted thereto, and the cord may be formed by twisting 4 or more fibers of different types together.

The fiber cords in the belt reinforcing layer 4 comprising the above-described single-twist cords preferably have a breaking elongation of not less than 3%, for example, 5 to 12%. In cases where the breaking elongation of the fiber cords is less than 3%, the risk of damaging of the belt reinforcing layer 4 by projections on the road or the like increases.

In the tire of the present invention, there is no restriction otherwise as long as the belt reinforcing layer 4 comprises fiber cords satisfying the above-described conditions. For example, in the example shown in the figure, the belt reinforcing layer 4 provided has almost the same width with the belt 3, but the width is not restricted as long as the belt reinforcing layer 4 covers at least the both edge portions of the belt 3. The belt reinforcing layer 4 comprises the above fiber cords and a coating rubber which covers the fiber cords, and is arranged substantially almost in parallel with the equatorial direction of the tire. In terms of the number of the layer(s), a single layer is used in the example shown in the figure, but 2 or more layers may also be used, and there is no restriction.

The carcass 2 comprises a radial cord layer in which a plurality of reinforcing cords arranged in parallel almost in the radial direction are covered with a coating rubber. In the example shown in the figure, the carcass 2 extends from the crown portion 12 to both bead portions 11 via both side wall portions 13 and anchored to the bead portions 11 by being wound around bead cores 1. Among the carcass plies constituting the carcass, at least one ply may have the so called envelope structure in which it is turned up around the bead cores 1 from the inside to the outside in the tire width direction, and the edges after the turning up are positioned between the belt 3 and the crown portion of the carcass 2. The number of the carcass(es) 2 is two in the example shown in the figure, but it may also be one or more than two, and not restricted.

Further, in the example shown in the figure, the belt 3 comprises two belt layers, but in the tire of the present invention, the number of the belt layer(s) constituting the belt 3 is not restricted thereto. The belt layer 3 is normally composed of a rubberized layer comprising cords, preferably a rubberized layer comprising steel cords, the cords extending in a direction having an angle relative to the tire equatorial plane. The two belt layers are piled such that the cords which constitute the belt layers cross each other across the equatorial plane to constitute the belt 3.

In the pneumatic radial tire of the present invention, the gas to be filled into the tire may be the normal air or an air whose oxygen partial pressure was changed, or an inert gas such as nitrogen.

EXAMPLES

The present invention will be described in more detail by way of Examples.

(Conventional Example 1, Comparative Example 1 and Examples 1-1 to 1-10)

Pneumatic radial tires having a tire size of 235/55R17 were prepared according to the specifications shown in the tables below, and their high-speed durability and the rolling resistance were evaluated. The tensile elastic modulus of the original yarn of each fiber in tables 1 to 3 below was measured according to JIS L-1013, and represented as the value of the initial modulus calculated based on the load at an elongation of 0.1% and the load at an elongation of 0.2%.

(Conventional Example 2, Comparative Example 2 and Examples 2-1 to 2-10)

Pneumatic radial tires having a tire size of 235/55R17 were prepared according to the specifications shown in tables 4 to 6 below, and their high-speed durability and the rolling resistance were evaluated.

As shown in Fig. 1, each sample tire has:

a bead core 1 provided in each of a left-and-right pair of bead portions 11;
two carcass plies extending from a crown portion 12 to both bead portions 11 via both side wall portions 13 and anchored to the bead cores 1, the carcass plies comprising a radial cord layer;
a belt 3 comprising two belt layers arranged in the outside of the crown portion in the radial direction;
a single belt reinforcing layer 4 arranged in the outside thereof almost in the equatorial direction of the tire; and
a tread 5 arranged in the outside thereof.

Among these, the belt 3 comprised steel cords having a 1×5 structure and a coating rubber covering them, and the cord angle was set to ±33° with respect to the circumferential direction of the tire. The belt reinforcing layer 4 was composed of single-twist cords (double-twist cords, in the cases of Comparative Examples 1 and 2) comprising a combination of two types of fibers shown as the cord materials A, B and C in the tables below, and a coating rubber covering them.

<High-speed Durability>

Each sample tire was placed on a rim having a rim size of 8J-17, and inflated to attain an inner pressure of 300 kPa, followed by measuring the speed at which a tire trouble occurred, by the step speed method according to a testing method of the JATMA standard. For Conventional Example 1, Comparative Example 1 and Examples 1-1 to 1-10, the result was represented as an index by taking the speed at which a tire trouble occurred in Conventional Example 1 as 100. For Conventional Example 2, Comparative Example 2 and Examples 2-1 to 2-10, the result was represented as an index by taking the speed at which a tire trouble occurred in Conventional Example 2 as 100. A larger index value means a higher critical speed in view of the durability, and therefore superior high-speed durability.

<Rolling Resistance>

The rolling resistance was evaluated by direct measurement of the resistance of each sample tire in a drum test at a speed of 80 km/h. For Conventional Example 1, Comparative Example 1 and Examples 1-1 to 1-10, the result was represented as an index by taking the value in Conventional Example 1 as 100. For Conventional Example 2, Comparative Example 2 and Examples 2-1 to 2-10, the result was represented as an index by taking the value in Conventional Example 2 as 100. A smaller index value means smaller rolling resistance, and therefore superior rolling resistance.

[Table 1]

| | | Conventional Example 1 | Comparative Example 1 | Example 1-1 | Example 1-2 |
|---|---|---|---|---|---|
| Belt reinforcing layer cord material A | Type | 66 Nylon | Para-aramid | Rayon | Para-aramid |
| | Original yarn elastic modulus (cN/dtex) | 44 | 410 | 120 | 410 |
| | Fineness | 1400 dtex/1 | 1670 dtex/1 | 1840 dtex | 1100 dtex |
| Belt reinforcing layer cord material B | Type | 66 Nylon | Para-aramid | PET[*1] | PET[*1] |
| | Original yarn elastic modulus (cN/dtex) | 44 | 410 | 100 | 100 |
| | Fineness | 1400 dtex/1 | 1670 dtex/1 | 1670 dtex | 1670 dtex |
| Belt reinforcing layer cord material C | Type | – | 66 Nylon | – | PET[*1] |
| | Original yarn elastic modulus (cN/dtex) | – | 44 | – | 100 |
| | Fineness | – | 1400 dtex/1 | – | 1670 dtex/1 |
| Fiber cord structure | | 1400 dtex/2 | (1670/1670/1400) dtex/3 | 3510 dtex/1 | 4440 dtex/1 |
| Fiber cord breaking elongation (%) | | 19 | 7.8 | 9.0 | 3.8 |
| Cord elastic modulus (cN/dtex) | | 20 | 150 | 40 | 160 |
| Content of high-rigidity fiber in fiber cord | | – | 71 | 52 | 25 |
| High-speed durability (index) | | 100 | 112 | 102 | 118 |
| Rolling resistance (index) | | 100 | 98 | 98 | 90 |

*1: polyethylene terephthalate

[Table 2]

| | | Example 1-3 | Example 1-4 | Example 1-5 | Example 1-6 |
|---|---|---|---|---|---|
| Belt reinforcing layer cord material A | Type | PEN[*2] | PEN[*2] | Para-aramid | Para-aramid |
| | Original yarn elastic modulus (cN/dtex) | 310 | 310 | 410 | 410 |
| | Fineness | 1100 dtex | 1670 dtex | 1670 dtex | 1100 dtex |
| Belt reinforcing layer cord material B | Type | PET[*1] | PET[*1] | 66 Nylon | 66 Nylon |
| | Original yarn elastic modulus (cN/dtex) | 100 | 100 | 44 | 44 |
| | Fineness | 1670 dtex | 1670 dtex | 1400 dtex | 1400 dtex |
| Belt reinforcing layer cord material C | Type | PET[*1] | PET[*1] | – | – |
| | Original yarn elastic modulus (cN/dtex) | 100 | 100 | – | – |
| | Fineness | 1670 dtex | 1670 dtex | – | – |
| Fiber cord structure | | 4440 dtex/1 | 5010 dtex/1 | 3070 dtex/1 | 2500 dtex/1 |
| Fiber cord breaking elongation (%) | | 7.8 | 7.9 | 5.8 | 7.1 |
| Cord elastic modulus (cN/dtex) | | 60 | 60 | 160 | 150 |
| Content of high-rigidity fiber in fiber cord | | 25 | 33 | 54 | 44 |
| High-speed durability (index) | | 108 | 109 | 110 | 110 |
| Rolling resistance (index) | | 92 | 92 | 90 | 92 |

*2: polyethylene naphthalate

[Table 3]

| | | Example 1-7 | Example 1-8 | Example 1-9 | Example 1-10 |
|---|---|---|---|---|---|
| Belt reinforcing layer cord material A | Type | Para-aramid | Para-aramid | Polyketone | Polyketone |
| | Original yarn elastic modulus (cN/dtex) | 410 | 410 | 360 | 360 |
| | Fineness | 1670 dtex | 1100 dtex | 1670 dtex | 1100 dtex |
| Belt reinforcing layer cord material B | Type | 66 Nylon | 66 Nylon | 66 Nylon | 66 Nylon |
| | Original yarn elastic modulus (cN/dtex) | 44 | 44 | 44 | 44 |
| | Fineness | 940 dtex | 2100 dtex | 1400 dtex | 1400 dtex |
| Belt reinforcing layer cord material C | Type | – | – | – | – |
| | Original yarn elastic modulus (cN/dtex) | – | – | – | – |
| | Fineness | – | – | – | – |
| Fiber cord structure | | 2610 dtex/1 | 3200 dtex/1 | 3070 dtex/1 | 2500 dtex/1 |
| Fiber cord breaking elongation (%) | | 4.2 | 7.7 | 6.9 | 8.2 |
| Fiber cord elastic modulus (cN/dtex) | | 150 | 150 | 160 | 160 |
| Content of high-rigidity fiber in fiber cord | | 64 | 34 | 54 | 44 |
| High-speed durability (index) | | 110 | 110 | 115 | 112 |
| Rolling resistance (index) | | 93 | 92 | 90 | 90 |

[Table 4]

|  |  | Conventional Example 2 | Comparative Example 2 | Example 2-1 | Example 2-2 |
|---|---|---|---|---|---|
| Belt reinforcing layer cord material A | Type | 66 Nylon | Para-aramid | Para-aramid | Para-aramid |
|  | Original yarn heat shrinkage rate (after heated at 160°C for 30min.) (%) | 6.0 | 0.1 | 0.1 | 0.1 |
|  | Fineness | 1400 dtex/1 | 1670 dtex/1 | 1100 dtex | 1100 dtex |
| Belt reinforcing layer cord material B | Type | 66 Nylon | Para-aramid | 66 Nylon | Rayon |
|  | Original yarn heat shrinkage rate (after heated at 160°C for 30min.) (%) | 6.0 | 0.1 | 6.0 | 1.5 |
|  | Fineness | 1400 dtex/1 | 1670 dtex/1 | 940 dtex | 1840 dtex |
| Belt reinforcing layer cord material C | Type | – | 66 Nylon | – | Rayon |
|  | Original yarn heat shrinkage rate (after heated at 160°C for 30min.) (%) | – | 6.0 | – | 1.5 |
|  | Fineness | – | 1400 dtex | – | 1840 dtex |
| Fiber cord structure | | 1400 dtex/2 | (1670/1670/1400) dtex/3 | 2040 dtex/1 | 4780 dtex/1 |
| Fiber cord breaking elongation (%) | | 19 | 7.8 | 7.6 | 7.6 |
| Cord heat shrinkage rate (after heated at 160°C for 30 min.) (%) | | 5.0 | 1.5 | 1.2 | 0.5 |
| High-speed durability (index) | | 100 | 112 | 103 | 109 |
| Rolling resistance (index) | | 100 | 98 | 98 | 95 |

[Table 5]

| | | Example 2-3 | Example 2-4 | Example 2-5 | Example 2-6 |
|---|---|---|---|---|---|
| Belt reinforcing layer cord material A | Type | Para-aramid | Para-aramid | Para-aramid | Para-aramid |
| | Original yarn heat shrinkage rate (after heated at 160°C for 30min.) (%) | 0.1 | 0.1 | 0.1 | 0.1 |
| | Fineness | 1100 dtex | 1100 dtex | 1100 dtex | 1100 dtex |
| Belt reinforcing layer cord material B | Type | Rayon | PET*1 | PET*1 | Polyketone |
| | Original yarn heat shrinkage rate (after heated at 160°C for 30min.) (%) | 1.5 | 7.8 | 7.8 | 0.6 |
| | Fineness | 1840 dtex | 2200 dtex | 1670 dtex | 1100 dtex |
| Belt reinforcing layer cord material C | Type | Rayon | PET*1 | PET*1 | Polyketone |
| | Original yarn heat shrinkage rate (after heated at 160°C for 30min.) (%) | 1.5 | 7.8 | 7.8 | 0.6 |
| | Fineness | 2240 dtex | 1100 dtex | 1100 dtex | 1100 dtex |
| Fiber cord structure | | 5180 dtex/1 | 4400 dtex/1 | 3870 dtex/1 | 3300 dtex/1 |
| Fiber cord breaking elongation (%) | | 7.4 | 7.2 | 6.8 | 4.8 |
| Cord heat shrinkage rate (after heated at 160°C for 30 min.) (%) | | 0.6 | 3.5 | 3.3 | 1.5 |
| High-speed durability (index) | | 110 | 109 | 108 | 117 |
| Rolling resistance (index) | | 94 | 94 | 95 | 90 |

[Table 6]

| | | Example 2-7 | Example 2-8 | Example 2-9 | Example 2-10 |
|---|---|---|---|---|---|
| Belt reinforcing layer cord material A | Type | Para-aramid | Para-aramid | Para-aramid | Para-aramid |
| | Original yarn heat shrinkage rate (after heated at 160°C for 30min.) (%) | 0.1 | 0.1 | 0.1 | 0.1 |
| | Fineness | 1670 dtex | 1100 dtex | 1670 dtex | 1100 dtex |
| Belt reinforcing layer cord material B | Type | PEN[*2] | PEN[*2] | Polyketone | Polyketone |
| | Original yarn heat shrinkage rate (after heated at 160°C for 30min.) (%) | 4.3 | 4.3 | 0.6 | 0.6 |
| | Fineness | 1670 dtex | 1100 dtex | 1670 dtex | 1100 dtex |
| Belt reinforcing layer cord material C | Type | – | – | – | – |
| | Original yarn heat shrinkage rate (after heated at 160°C for 30min.) (%) | – | – | – | – |
| | Fineness | – | – | – | – |
| Fiber cord structure | | 3340 dtex/1 | 2200 dtex/1 | 3340 dtex/1 | 2200 dtex/1 |
| Fiber cord breaking elongation (%) | | 7.1 | 6.2 | 5.1 | 5.0 |
| Cord heat shrinkage rate (after heated at 160°C for 30 min.) (%) | | 2.2 | 2.0 | 1.2 | 1.1 |
| High-speed durability (index) | | 110 | 110 | 115 | 115 |
| Rolling resistance (index) | | 92 | 92 | 92 | 92 |

From the results shown in the above tables, it is evident that the sample tires in Examples, in which single-twist cords comprising a combination of different types of fibers are used as the fiber cords forming the belt reinforcing layer, exhibit superior high-speed durability and rolling resistance compared to the sample tires in Comparative Examples which do not satisfy such conditions.

## Claims

1.  A pneumatic radial tire (10) comprising:

    a bead core (1) provided in each of a left-and-right pair of bead portions (11);
    a carcass ply (2) extending from a crown portion (12) to both bead portions via both side wall portions (13) and anchored to said bead cores, said carcass ply comprising a radial cord layer;
    a belt (3) arranged in the outside of the crown portion of said carcass ply in the radial direction;
    a belt reinforcing layer (4) arranged in the outside of said belt almost in the equatorial direction of the tire; and
    a tread (5) arranged in the outside of said belt reinforcing layer, **characterized in that**
    fiber cords forming said belt reinforcing layer are single-twist cords comprising a combination of different types of fibers.

2.  The pneumatic radial tire according to claim 1, wherein said different types of fibers are a high-rigidity fiber having an original yarn elastic modulus of not less than 200 cN/dtex and a low-rigidity fiber having an original yarn elastic modulus of not more than 100 cN/dtex.

3.  The pneumatic radial tire according to claim 1, wherein said different types of fibers are a heat-shrinkable fiber having a heat shrinkage rate of not less than 0.5% after being heated at 160°C for 30 minutes and a heat non-shrinkable fiber having a heat shrinkage rate of not more than 0.2% after being heated at 160°C for 30 minutes.

4.  The pneumatic radial tire according to claim 1, wherein the breaking elongation of the fiber cords forming said belt reinforcing layer is not less than 3%.

5.  The pneumatic radial tire according to claim 1, wherein the content of a high-rigidity fiber having an original yarn elastic modulus of not less than 200 cN/dtex in the fiber cords forming said belt reinforcing layer is not less than 25%.

6.  The pneumatic radial tire according to claim 1, wherein the content of a heat-shrinkable fiber having a heat shrinkage rate of not less than 0.5% after being heated at 160°C for 30 minutes in the fiber cords forming said belt reinforcing layer is not less than 30%.

7.  The pneumatic radial tire according to claim 1, wherein the fiber cords forming said belt reinforcing layer have a total fineness of not less than 800 dtex and not more than 8500 dtex.

## Patentansprüche

1.  Radialluftreifen (10), der aufweist:

    einen Wulstkern (1), der in jedem eines linken und rechten Paares der Wulstabschnitte (11) vorhanden ist;
    eine Karkassenlage (2), die sich von einem Zenitabschnitt (12) zu beiden Wulstabschnitten über beide Seitenwandabschnitte (13) erstreckt und an den Wulstkernen verankert ist, wobei die Karkassenlage eine radiale Kordlage aufweist;
    einen Gürtel (3), der in der Außenseite des Zenitabschnittes der Karkassenlage in der radialen Richtung angeordnet ist;
    eine Gürtelverstärkungslage (4), die in der Außenseite des Gürtels fast in der Äquatorrichtung des Reifens angeordnet ist; und
    eine Lauffläche (5), die in der Außenseite der Gürtelverstärkungslage angeordnet ist, **dadurch gekennzeichnet, dass**
    Faserkorde, die die Gürtelverstärkungslage bilden, einzeln gedrehte Korde sind, die eine Kombination von verschiedenen Faserarten aufweisen.

**2.** Radialluftreifen nach Anspruch 1, bei dem die verschiedenen Faserarten eine Faser mit hoher Steifigkeit mit einem Elastizitätsmodul des Ausgangsgarnes von nicht weniger als 200 cN/dtex und eine Faser mit niedriger Steifigkeit mit einem Elastizitätsmodul des Ausgangsgarnes von nicht mehr als 100 cN/dtex sind.

**3.** Radialluftreifen nach Anspruch 1, bei dem die verschiedenen Faserarten eine wärmeschrumpfbare Faser mit einer Wärmeschrumpfizngsgeschwindigkeit von nicht weniger als 0,5 %, nachdem bei 160 °C über 30 Minuten erwärmt wurde, und eine nichtwärmeschrumpfbare Faser mit einer Wärmeschrumpfungsgeschwindigkeit von nicht mehr als 0,2 % sind, nachdem bei 160 °C über 30 Minuten erwärmt wurde.

**4.** Radialluftreifen nach Anspruch 1, bei dem die Reißdehnung der Faserkorde, die die Faserverstärkungslage bilden, nicht kleiner ist als 3 %.

**5.** Radialluftreifen nach Anspruch 1, bei dem der Gehalt an einer Faser mit hoher Steifigkeit mit einem Elastizitätsmodul des Ausgangsgarnes von nicht weniger als 200 cN/dtex in den Faserkorden, die die Gürtelverstärkungslage bilden, nicht kleiner ist als 25 %.

**6.** Radialluftreifen nach Anspruch 1, bei dem der Gehalt an einer wärmeschrumpfbaren Faser mit einer Wärmeschrumpfungsgeschwindigkeit von nicht weniger als 0,5 %, nachdem bei 160 °C über 30 Minuten erwärmt wurde, in den Faserkorden, die die Gürtelverstärkungslage bilden, nicht kleiner ist als 30 %.

**7.** Radialluftreifen nach Anspruch 1, bei dem die Faserkorde, die die Gürtelverstärkungslage bilden, eine Gesamtfeinheit von nicht weniger als 800 dtex und nicht mehr als 8500 dtex aufweisen.

**Revendications**

**1.** Bandage pneumatique radial (10), comprenant :

une tringle (1), agencée dans chaque partie d'une paire de parties de talon de gauche et de droite (11) ;
une nappe de carcasse (2), s'étendant à partir d'une partie de sommet (12) vers les deux parties de talon à travers deux parties de flanc (13) et ancrée sur lesdites tringles, ladite nappe de carcasse comprenant une couche de câblés radiale ;
une ceinture (3), agencée dans la partie externe de la partie de sommet de ladite nappe de carcasse, dans la direction radiale ;
une couche de renforcement de la ceinture (4), agencée dans la partie externe de ladite ceinture, pratiquement dans la direction équatoriale du bandage pneumatique ; et
une bande de roulement (5), agencée dans la partie externe de ladite couche de renforcement de la ceinture, **caractérisé en ce que** :

des câblés de fibres formant ladite couche de renforcement de la ceinture sont des câblés à torsion simple, comprenant une combinaison de différents types de fibres

**2.** Bandage pneumatique radial selon la revendication 1, dans lequel lesdits différents types de fibres comprennent une fibre à rigidité élevée, présentant un module d'élasticité du fil original non inférieur à 200 cN/dtex, et une fibre à rigidité réduite, présentant un module d'élasticité du fil original non supérieur à 100 cN/dtex.

**3.** Bandage pneumatique radial selon la revendication 1, dans lequel lesdits différents types de fibres comprennent une fibre thermorétractable, présentant un taux de thermorétraction non inférieur à 0,5% après un chauffage à 160°C pendant 30 minutes, et une fibre non thermorétractable, présentant un taux de thermorétraction non supérieur à 0,2% après un chauffage à 160°C pendant 30 minutes.

**4.** Bandage pneumatique radial selon la revendication 1, dans lequel l'allongement à la rupture des câblés de fibres formant ladite couche de renforcement de la ceinture n'est pas inférieur à 3%.

**5.** Bandage pneumatique radial selon la revendication 1, dans lequel la teneur en fibres à rigidité élevée, présentant un module d'élasticité du fil original non inférieur à 200 cN/dtex dans les câblés de fibres formant ladite couche de renforcement de la ceinture, n'est pas inférieure à 25%.

**6.** Bandage pneumatique radial selon la revendication 1, dans lequel la teneur en fibres thermorétractables, présentant un taux de thermorétraction non inférieur à 0,5% après un chauffage à 160°C pendant 30 minutes dans les câblés de fibres formant ladite couche de renforcement de la ceinture, n'est pas inférieure à 30%.

**7.** Bandage pneumatique radial selon la revendication 1, dans lequel les câblés de fibres formant ladite couche de renforcement de la ceinture présentent une finesse totale non inférieure à 800 dtex et non supérieure à 8500 dtex.

Fig.1

**EP 2 246 201 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59001601 A
- JP 2002154304 A